# EUROPÄISCHE PATENTSCHRIFT

(11) **EP 1 177 449 B1**
(45) Veröffentlichungstag und Bekanntmachung des Hinweises auf die Patenterteilung: **06.10.2004**
(21) Anmeldenummer: 01919117.0
(22) Anmeldetag: 26.01.2001
(51) Int. Cl.: G01P 1/02

(54) **INDUKTIVER SENSOR ( DREHZAHLFÜHLER ) MIT KONISCHEM SPULENGRUNDKÖRPER**
INDUCTIVE SENSOR (SPEED SENSOR) WITH A CONICAL COIL BASE BODY
DETECTEUR INDUCTIF (DETECTEUR DE VITESSE) A CORPS DE BASE DE BOBINE CONIQUE

(30) Priorität: 08.02.2000 DE 10005513
(43) Veröffentlichungstag der Anmeldung: 06.02.2002
(73) Patentinhaber: ROBERT BOSCH GMBH, 70442 Stuttgart (DE)
(72) Erfinder: JENNERJAHN, Andreas, 99817 Eisenach (DE)
(86) Internationale Anmeldenummer: PCT/DE2001/000309
(87) Internationale Veröffentlichungsnummer: WO 2001/059464

(56) Entgegenhaltungen:
- DE-A- 3 628 585
- DE-A- 4 122 548
- DE-A- 4 228 888
- DE-A- 19 513 464
- FR-A- 2 762 442
- US-A- 5 302 929

## Beschreibung

### Stand der Technik

Die vorliegende Erfindung betrifft einen induktiven Sensor, insbesondere Drehzahlfühler nach der Gattung des Hauptanspruchs, DE-A1-195 13 464, DE-A1-36 28 585.

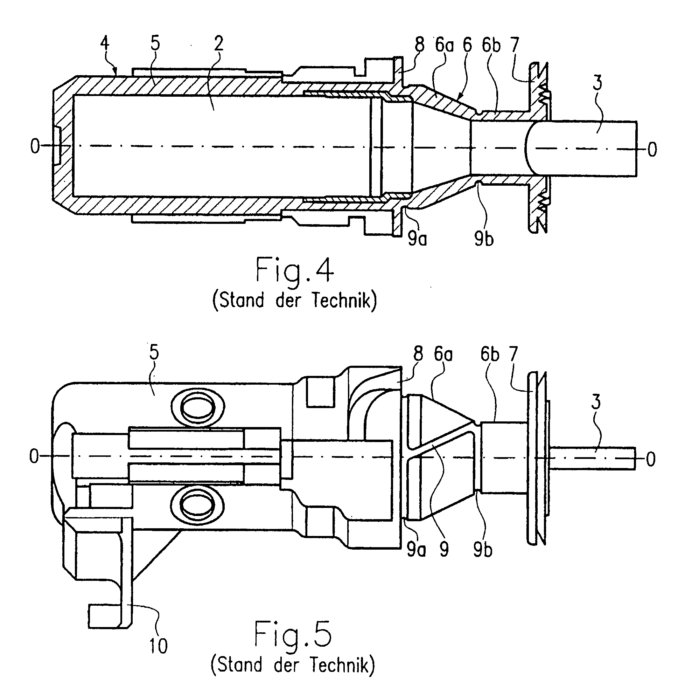

Induktive Sensoren werden beispielsweise zur Erfassung der Drehzahl eines Rades eines Fahrzeuges als Drehzahlsensor für Antiblockiersysteme verwendet. Hierbei handelt es sich um einen passiven induktiven Sensor, dessen Funktion auf dem Prinzip der elektromagnetischen Induktion basiert. Ein fest auf der Radachse montiertes, ferromagnetisches Impulsrad induziert in einer Spule des in einem konstanten Abstand befestigten Sensors eine drehzahlabhängige Spannung, indem es die Richtung des Magnetfeldes über die ansteigenden und abfallenden Flanken der Zähne des Impulsrades ändert. Ein derartiger Sensor ist in den Figuren 4 und 5 dargestellt. Ein derartiger induktiver Sensor besteht aus einem Gehäuse 4, in welchem ein Permanentmagnet 2 mit einem Polstift 3 angeordnet ist. Der Magnet 2 besteht aus einem Ferritkern (AlNiKo) und einem kalt geschlagenen Polkern zur Leitung und Bündelung der magnetischen Feldlinien. Wie in Figur 4 gezeigt, ist der kalt geschlagene Polkern fertigungsbedingt teilweise konisch ausgebildet. Das Gehäuse 4 besteht aus einem Gehäusehauptkörper 5 und einem Spulengrundkörper 6.

Wie aus Figur 4 ersichtlich ist, besteht der Spulengrundkörper 6 aus einem konischen Bereich 6a und einem zylindrischen Bereich 6b. Weiter sind im Spulengrundkörper 6 Spulengrundkanäle 9, 9a und 9b zur Drahtverlegung angeordnet.

Zur Herstellung der Spule wird ein Draht um den Spulengrundkörper 6 herum gewickelt. Der Draht wird nach der Verbindung mit einer Stromschiene über einen Eingangskanal in den Spulengrundkanal 9 am oberen größeren Konuskreis verlegt und nach einer Dreiviertel-Drehung in den diagonalen Spulengrundkanal eingeführt, um dann in den Spulengrundkanal am unteren kleineren Konuskreis eingelegt zu werden (vgl. Figur 5). Im unteren Spulengrundkanal wird der Draht mit vier Umdrehungen verlegt und anschließend aus dem Spulengrundkanal heraus geführt und zum Wickeln der Spule benutzt. Dabei wird zuerst der Bereich des Spulengrundkörpers 6 mit dem kleineren zylindrischen Durchmesser 6b zwischen einem ersten Spulenschild 7 und dem konisch ausgebildeten Bereich 6a aufgefüllt, bis der größere Durchmesser des Konus 6a erreicht ist. Um diesen Bereich am Konus 6a und dem kleinen zylindrischen Bereich 6b. aufzufüllen, werden ca. 4200 Umwicklungen von insgesamt ca. 7200 Umwicklungen benötigt. Anschließend kann die Spule vom ersten Spulenschild 7 zum zweiten Spulenschild 8 zylindrisch gewickelt werden.

Nach dem Umspritzen sind häufig am äußeren Umfang der Spule Abbildungen bzw. Eintiefungen der Spulengrundkanäle 9, 9a und 9b bei Freilösen der Spule erkennbar. Weiterhin tritt beim Wickeln zwischen dem ersten Spulenschild 7 und dem konischen Bereich 6a häufig ein Auflaufen des Drahtes in Richtung des größeren Durchmessers des konischen Bereichs 6a auf. Dadurch können keine definierten Anordnungen des Drahtes der Spule erreicht werden. Häufig werden hierbei auch Schlaufenlegungen des Wickeldrahts verursacht.

Zum Schutz der Spule wird nach dem Wickeln diese noch mit einer direkten Umspritzung aus Kunststoff direkt abgedeckt. Üblicherweise wird der Spulengrundkörper aus PA6 und die Umspritzung aus PA6.6 hergestellt. Dadurch kann der geringere Schmelzpunkt von PA6 (ca. 214°C) ausgenutzt werden, um während des Umspritzens mit dem Kunststoff PA6.6 (Schmelzpunkt ca. 228°C) bei einer Verarbeitungstemperatur an den Heißkanaldüsen von ca. 305°C ein Anschmelzen der ringförmigen Schmelzspitzen auf dem Spulenschild zur Herstellung der Dichtheit zu erreichen.

Auf Grund des oben dargestellten Aufbaus und Herstellungsprozesses des induktiven Sensors im Stand der Technik treten Probleme bei Temperaturwechseln auf. Hierbei wird z.B. von den Automobilherstellern das fehlerfreie Bestehen von mindestens 1000 Temperaturwechseln bei einem thermischen Schock-Test von einer Temperatur von - 30°C auf eine Temperatur von +100°C für jeweils 30 Minuten gefordert, wobei die Solltemperatur innerhalb von fünf Minuten erreicht sein muss. Die oben beschriebenen Sensoren gemäß dem Stand der Technik erreichen jedoch lediglich ca. 200 Temperaturwechsel. Dadurch sind die Sensoren auf Grund von Dauerbrüchen im Spulendraht zerstört, welche insbesondere an den Spulengrundkanälen sowie am Eingangskanal des Spulendrahtes auftreten.

Des Weiteren ist aus der EP-632897 ein induktiver Sensor bekannt, bei dem ein Kontaktbereich an den Enden der Wicklungen der Spule und der Stromschienen mit einer Silikonmasse und einem Band aus Polyimidmaterial zum Spritzgussgehäuse hin abgedeckt ist. Dies verbessert zwar die Robustheit gegenüber Temperaturwechseln, jedoch kann die geforderte Anzahl von 1000 Temperaturwechseln auch nicht mit einem derartigen induktiven Sensor erreicht werden.

### Vorteile der Erfindung

Der erfindungsgemäße induktive Sensor mit den Merkmalen des Hauptanspruches hat demgegenüber den Vorteil, dass der Spulengrundkörper vollständig konisch ausgebildet ist. Durch die konische Ausbildung des Spulengrundkörpers kann auf das Vorsehen von Spulengrundkanälen verzichtete werden. Dadurch kann insbesondere verhindert werden, dass an den Spulengrundkanälen während des Wickelns oder des Umspritzens der Spule eine Beschädigung des Spulendrahtes auftritt, welche später bei häufigen Temperaturwechseln zu einem Bruch des Spulendrahtes führt. Weiterhin kann dadurch der mechanische Widerstand der gewickelten Spule gegen den Umspritzdruck erhöht werden, da die Spule nach dem Wickeln einen zylindrischen oder nur leicht konischen Außenumfang aufweist. Weiterhin vorteilhaft kann durch das Vorsehen des konischen Spulengrundkörpers die Anzahl der Windungen reduziert werden, da kein Auffüllen eines zylindrischen Bereichs mit einem kleinen Durchmesser wie im Stand der Technik notwendig ist. Ebenfalls entfällt die aufwendige und komplizierte Verlegung des Drahtes in den Spulengrundkanälen. Dadurch wird die Wickelzeit gesenkt und somit kann der erfindungsgemäße induktive Sensor kostengünstig hergestellt werden. Weiterhin ist es erfindungsgemäß möglich, den ohmschen Widerstand pro Windung R(n) zu linearisieren, woraus eine erhöhte Widerstandskonstanz resultiert. Weiterhin werden mit dem erfindungsgemäßen induktiven Sensor bei einem thermischen Schock-Test zwischen -30°C und +100°C mehr als 1750 Temperaturwechsel erreicht.

Vorzugsweise beträgt der Winkel des Außenumfanges des konischen Spulengrundkörpers zu einer Mittelachse des induktiven Sensors ca. 2,85°. Durch diesen leicht konischen Spulengrundkörper wird insbesondere sichergestellt, dass kein Auflaufen des Wickeldrahtes in Richtung des größeren Konusdurchmessers auftritt. Insbesondere wird dadurch auch die Vermeidung von Schlaufenlegungen des Wickeldrahtes erreicht. Dadurch kann die Widerstandskonstanz erhöht werden und die Anzahl der Fehlteile signifikant verringert werden.

In einem bevorzugten Ausführungsbeispiel der vorliegenden Erfindung sind die Wicklungen der Spule am Spulengrundkörper parallel angeordnet. Dadurch kann ein definierter Aufbau der Spule durch die Wicklungen erreicht werden. Vorzugsweise sind die Wicklungen der Spule dabei von einem ersten Spulenschild zu einem zweiten Spulenschild parallel, d.h. eine Wicklung neben der anderen, angeordnet.

Vorzugsweise ist eine Umspritzung der Spule aus dem gleichen Material wie der Spulengrundkörper hergestellt. Dadurch kann sichergestellt werden, dass Spannungen auf Grund unterschiedlicher Expansion und Kompression den Draht in den Kanälen von den Kontaktschienen zur Wicklung und umgekehrt nicht beschädigen. Vorzugsweise wird hierbei als Material der Kunststoff PA6.12 verwendet.

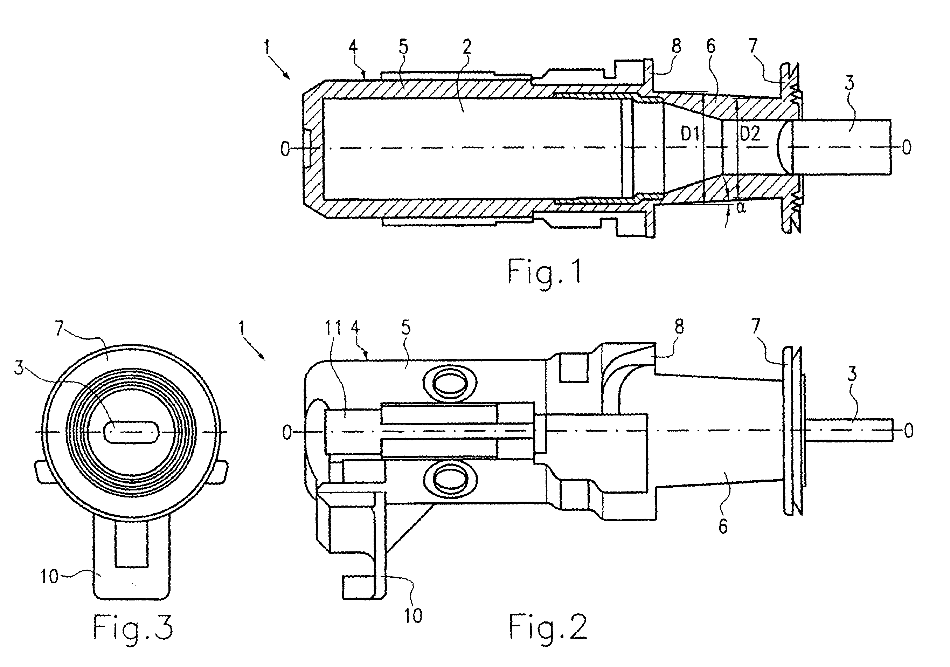

Wie aus der Figur 1 und 4 ersichtlich ist, ist der Polkern 3 konisch aufgebaut und weist Abschnitte mit unterschiedlichem Durchmesser auf. Die dem Polkern 3 zugewandte Wandung des Spulenkörpers, insbesondere des Spulengrundkörpers, korrespondiert aus Platzgründen mit der Form des Polkerns. Wie ein Vergleich der Figuren 1 und 4 zeigt, bedeutet die leicht konische Form eine dickere Ausbilung der Wandung des Spulengrundkörpers. Es ist mehr Material notwendig, um die leicht konische Form zu schaffen. Dadurch würde die Baugröße bei gleichen Spulenverhältnissen wie beim Stand der Technik erhöht werden. Durch die vorteilhaft Form des Spulengrundkörpers ergibt sich aber eine harmonischere Wicklungsverteilung. Die sogenannte Dichte der Wicklung bezogen auf die Länge und des Volumens des Spulengrundkörpers wird vergrößert. Bei gleicher Leistung wie beim Stand der Technik hat man eine geringere Wicklungszahl, sodass sich trotzdem keine höhere Bauhöhe gegenüber dem Stand der Technik ergibt. Besonders vorteilhaft ist auch, dass der ohmsche Widerstand innerhalb einer Serie konstant bleibt.

### Zeichnung

Ein Ausführungsbeispiel der Erfindung ist in der Zeichnung dargestellt und wird in der nachfolgenden Beschreibung näher erläutert.
Figur 1 zeigt eine Schnittansicht eines induktiven Sensors gemäß einem ersten Ausführungsbeispiel der vorliegenden Erfindung,
Figur 2 zeigt eine Seitenansicht des in Figur 1 dargestellten induktiven Sensors,
Figur 3 zeigt eine Vorderansicht des in den Figuren 1 und 2 dargestellten induktiven Sensors,
Figur 4 zeigt eine Schnittansicht eines induktiven Sensors gemäß dem Stand der Technik, und
Figur 5 zeigt eine Seitenansicht des in Figur 4 dargestellten induktiven Sensors gemäß dem Stand der Technik.

### Beschreibung des Ausführungsbeispiels

In den Figuren 1 bis 3 ist ein Ausführungsbeispiel eines induktiven Sensors gemäß der vorliegenden Erfindung dargestellt. Wie insbesondere in Figur 1 gezeigt, umfasst der induktive Sensor 1 einen aus AlNiKo hergestellten Magneten 2 mit einem an einem Ende angeordneten Polstift 3.

Der Magnet 2 ist vollständig von einem aus Kunststoff hergestellten Gehäuse 4 umgeben, wobei der Polstift 3 aus dem Gehäuse 4 hervorsteht. Das Gehäuse 4 ist einstückig gebildet und besteht aus einem Gehäusehauptkörper 5 und einem Spulengrundkörper 6. Weiter ist ein erstes Spulenschild 7 und ein zweites Spulenschild 8 ebenfalls einstückig mit dem Gehäuse 4 gebildet. Als Material für das Gehäuse kann z.B. das Polyamid PA6.12 verwendet werden.

Der Spulengrundkörper 6 ist, wie in den Figuren 1 und 2 gezeigt, zwischen dem ersten Spulenschild 7 und dem zweiten Spulenschild 8 angeordnet. Hierbei ist der Spulengrundkörper 6 leicht konisch ausgebildet, wobei der größere Durchmesser D1 des Konus des Spulengrundkörpers 6 am zweiten Spulenschild 8 angeordnet ist und der kleinere Durchmesser D2 des Konus am ersten Spulenschild 7 angeordnet ist. Wie in den Figuren 1 und 2 gezeigt, ist der Spulengrundkörper in seiner axialen Längung in Richtung der Achse 0-0 vollständig konisch ausgebildet und weist auch an seinen Verbindungsstellen zu den Spulenschilden 7 und 8 keine zylindrischen Bereiche auf. Wie in Figur 1 gezeigt, beträgt dabei der Winkel α zwischen einer zur Achse 0-0 parallelen Gerade und einer Mantellinie des konischen Spulengrundkörpers 6 α = 2,85°. Vorteilhaft ist hierbei ein Winkelbereich von 2,5° < α <3,2°, wobei sich der untere Bereich auch eventuell bis 1.0° erstrecken kann.

Weiter ist am Gehäuse 4 ein Befestigungsflansch 10 vorgesehen (vgl. Figuren 2 und 3), an dem das Anschlusskabel des induktiven Sensors fixiert ist.

Nach dem Herstellen einer Verbindung des Drahtes für die Spule mit einer Stromschiene 11, wird dieser direkt auf den konisch ausgebildeten Spulengrundkörper 6 aufgewickelt. Auf Grund des leicht konisch ausgebildeten Spulengrundkörpers 6 kann dabei eine parallele Wicklung des Drahtes für die Spule (in den Figuren nicht dargestellt) erreicht werden. Das heißt, eine Drahtschlaufe der Spule ist auf dem Spulengrundkörper 6 neben der andern angeordnet. Dadurch wird eine im Voraus bestimmbare Geometrie des Spulendrahtes erreicht. Dies führt zum einen zu einer Erhöhung der Widerstandskonstanz und vermeidet zum anderen Probleme, welche infolge des Umspritzens der Spule auftreten, wie z.B. eine Beschädigung des Drahtes wegen sich kreuzender Drahtschlaufen. Weiterhin kann die Wickelzeit deutlich reduziert werden, da kein Einlegen in Spulengrundkanäle o.ä. erforderlich ist und die Gesamtwindungszahl reduziert ist. Da der Durchmesser D2 des Spulengrundkörpers 6 nur etwas kleiner als der Durchmesser D1 ist (vgl. Figur 1), kann auch die Zahl der Wicklungen im Vergleich mit dem Stand der Technik bei gleichen Leistungsmerkmalen deutlich reduziert werden. Dadurch können Material- und Herstellungskosten reduziert werden.

Die Wirkungsweise des induktiven Sensors ist hinreichend bekannt und muss deshalb hier nicht ausführlich erläutert werden. Bei stromdurchflossener Spule wird abhängig vom zu messenden Bauteil ein Messsignal erzeugt. Wird nun ein ferromagnetisches Geberrad, wie z.B. ein Zahnrad oder eine Zahnscheibe, an dem Polstift 3 vorbeibewegt, ändert sich während der Bewegung des Zahnrads auf Grund der Zähne und Zahnzwischenräume der Abstand zwischen Zahnrad und Polstift. Das heißt, die Breite des Luftspalts zwischen dem Polstift 3 und dem Zahnrad wird geändert. Dadurch wird das Magnetfeld beeinflusst und somit ein Messsignal erzeugt.

Der erfindungsgemäße induktive Sensor zur berührungslosen Erfassung eines ferromagnetischen Gegenstandes wie z.B. eines Zahnrades oder einer Zahnscheibe, kann insbesondere als Drehzahlsensor an Rädern für ein Antiblockiersystem oder auch bei anderen induktiven Sensoren wie z.B. einem Drehzahlgeber verwendet werden.

Zusammenfassend betrifft die vorliegende Erfindung somit einen induktiven Sensor zur berührungslosen Erfassung eines ferromagnetischen Gegenstandes. Der Sensor weist ein Gehäuse 4 mit einem Gehäusehauptkörper 5 und einem Spulengrundkörper 6 auf, wobei um den Spulengrundkörper 6 eine Spule gewickelt ist. Weiter umfasst der Sensor einen im Gehäuse angeordneten Magneten 2 mit einem Polstift 3. Der Spulengrundkörper 6 des Gehäuses 4 ist dabei vollständig konisch, insbesondere leicht konisch, ausgebildet.

## Patentansprüche

1. Induktiver Sensor, insbesondere Drehzahlfühler mit
- einem Gehäuse (4) mit einem Gehäusehauptkörper (5) und einem Spulengrundkörper (6) mit Spulenschildern (7, 8), wobei um den Spulengrundkörper (6) eine Spule gewickelt ist, und
- einem im Gehäuse (4) angeordneten Magneten (2) mit einem Polstift (3),
**dadurch gekennzeichnet, dass**
der Spulengrundkörper (6) zwischen den Spulenschildern (7, 8) vollständig konisch ausgebildet ist.

2. Inuktiver Sensor nach Anspruch 1, **dadurch gekennzeichnet, dass** der Spulengrundkörper (6) eine Konizität im Winkelbereich von 2,5° < α < 3,2° aufweist.

3. Induktiver Sensor nach Anspruch 1 oder 2, **dadurch gekennzeichnet, dass** der Spulengrundkörper (6) eine Konizität mit einem Winkel (^{...}) von 2,85° aufweist.

4. Induktiver Sensor nach einem der Ansprüche 1 bis 3, **dadurch gekennzeichnet, dass** der Gehäusehauptkörper (5) und der Spulengrundkörper (6) einstückig sind.

5. Induktiver Sensor nach einem der Ansprüche 1 bis 4, **dadurch gekennzeichnet, dass** die Spule am Spulengrundkörper (6) parallel gewickelt ist.

6. Induktiver Sensor nach Anspruch 5, **dadurch gekennzeichnet, dass** die parallele Wicklung der Spule am Spulengrundkörper (6) von einem ersten Spulenschild (7) zu einem zweiten Spulenschild (8) reicht.

7. Induktiver Sensor nach einem der Ansprüche 1 bis 6, **dadurch gekennzeichnet, dass** der Spulengrundkörper (6) aus PA6.12 hergestellt ist.

8. Induktiver Sensor nach einem der Ansprüche 1 bis 7, **dadurch gekennzeichnet, dass** die Zahl der Windungen der Spule ≤ 6800 Windungen ist.

9. Induktiver Sensor nach einem der Ansprüche 1 bis 8, **dadurch gekennzeichnet, dass** die Spule eine Umspritzung aufweist, welche aus dem gleichen Material wie der Spulengrundkörper (6) hergestellt ist.

## Claims

1. Inductive sensor, in particular a rotation speed sensor, having
- a housing (4) with a housing main body (5) and a coil former (6) with coil plates (7, 8), with a coil being wound around the coil former (6), and
- a magnet (2), which is arranged in the housing (4) and has a pole pin (3),
**characterized in that**
the coil former (6) is designed to be completely conical between the coil plates (7, 8).

2. Inductive sensor according to Claim 1, **characterized in that** the coil former (6) has a conicity in the angle range 2.5°< α < 3.2°.

3. Inductive sensor according to Claim 1 or 2, **characterized in that** the coil former (6) has a conicity with an angle (..) of 2.85°.

4. Inductive sensor according to one of Claims 1 to 3, **characterized in that characterized in that** the housing main body (5) and the coil former (6) are integral.

5. Inductive sensor according to one of Claims 1 to 4, **characterized in that** the coil is wound parallel on the coil former (6).

6. Inductive sensor according to Claim 5, **characterized in that** the parallel winding of the coil on the coil former (6) extends from a first coil plate (7) to a second coil plate (8).

7. Inductive sensor according to one of Claims 1 to 6, **characterized in that** the coil former (6) is produced from PA6.12.

8. Inductive sensor according to one of Claims 1 to 7, **characterized in that** the number of turns on the coil is ≤ 6800 turns.

9. Inductive sensor according to one of Claims 1 to 8, **characterized in that** the coil has an extrusion coating which is produced from the same material as the coil former (6).

## Revendications

1. Capteur inductif, notamment détecteur de vitesse de rotation, comprenant
- un boîtier (4) avec un corps principal de boîtier (5) et un corps de base de bobine (6) avec des flasques de bobine (7, 8), une bobine étant enroulée autour du corps de base de bobine (6), et
- un aimant (2) avec une broche polaire (3) disposé dans le boîtier (4),
**caractérisé en ce que**
le corps de base de bobine (6) présente une forme entièrement conique entre les flasques de bobine (7, 8).

2. Capteur inductif selon la revendication 1,
**caractérisé en ce que**
le corps de base de bobine (6) présente une conicité dans la plage angulaire de 2,5° < α < 3,2°.

3. Capteur inductif selon la revendication 1 ou 2,
**caractérisé en ce que**
le corps de base de bobine (6) présente une conicité d'angle (α) de 2,85°.

4. Capteur inductif selon l'une quelconque des revendications 1 à 3,
**caractérisé en ce que**
le corps principal de boîtier (5) et le corps de base de bobine (6) sont réalisés d'une seule pièce.

5. Capteur inductif selon l'une quelconque des revendications 1 à 4,
**caractérisé en ce que**
la bobine est enroulée de façon parallèle sur le corps de base de bobine (6).

6. Capteur inductif selon la revendication 5,
**caractérisé en ce que**
l'enroulement parallèle de la bobine sur le corps de base de bobine (6) s'étend d'un premier flasque de bobine (7) jusqu'à un deuxième flasque de bobine (8).

7. Capteur inductif selon l'une quelconque des revendications 1 à 6,
**caractérisé en ce que**
le corps de base de bobine (6) est réalisé en PA6.12.

8. Capteur inductif selon l'une quelconque des revendications 1 à 7,
**caractérisé en ce que**
le nombre de spires de la bobine est ≤ 6800 spires.

9. Capteur inductif selon l'une quelconque des revendications 1 à 8,
**caractérisé en ce que**
la bobine présente un enrobage injecté à partir du même matériau que le corps de base de bobine (6).
